# EUROPEAN PATENT SPECIFICATION

(11) **EP 3 321 550 B1**
(45) Date of publication and mention of the grant of the patent: **15.12.2021**
(21) Application number: 17201538.0
(22) Date of filing: 08.05.2013
(51) Int. Cl.: F16K 31/60, F16K 5/06

(54) **IMPROVED STRUCTURE OF A BALL VALVE AND THE OPERATING KEY THEREOF**
VERBESSERTE STRUKTUR EINES KUGELVENTILS UND BETRIEBSSCHLÜSSEL DAFÜR
STRUCTURE AMÉLIORÉE D'UN CLAPET À BILLE ET SA CLÉ DE COMMANDE

(30) Priority: 03.12.2012 ES 201231879
(43) Date of publication of application: 16.05.2018
(62) Divisional of application: 13860537.3
(73) Proprietor: Valvulas Arco, S.L., 46134 Foios (Valencia) (ES)
(72) Inventor: FERRER BELTRAN, José María, 46134 FOIOS (Valencia) (ES)
(74) Representative: Herrero & Asociados, S.L.

(56) References cited:
- DE-A1-102006 040 872
- KR-U- 20120 000 114
- US-A- 129 069
- US-A- 381 500
- US-A- 849 121
- US-A- 3 606 244
- US-A- 4 603 833
- US-E- R E26 998

## Description

The present invention, i.e., improved structure of a ball valve and the operating key thereof, consists of a novel valve and key structure, the main novelty of which lies in the structure for rotating the spherical closing surface and the associated key, having as a main advantage that it constitutes a seat between a key and a closing body having greater resistance and durability compared to conventional structures in such valves.

For this reason, the object of the present invention will be of interest for the sector of the industry which manufactures and supplies valves and particularly the so-called ball valves.

### Background

Valves referred to as ball valves are structures that have been known for decades. It will suffice to mention, by way of example, Spanish Utility Model U0214254 with an application date of July 28, 1975 belonging to AUSTINOX S.A. entitled "Ball Valve" which already describes a typical structure of such valves, consisting of a surrounding frame, an intermediate sleeve and an inner spherical closing body with two diametrically opposing mouths.

German Patent Application DE102006040872 A1 describes a ball valve with integral non return valve, especially for feeding a water heater, said valve being operated by a ratchet drive via an external operating lever.

On the other hand, US patent application US3606244 A describes a valve body having a coupling means at one end, a valve member within the body, a manually operable actuating member connected to operate both the coupling means and the valve member in sequence, together with a pre-loaded axially movable breakaway mechanism attached to the actuator so as to operate it under a condition where the predetermined breakaway force is encountered.

In fact, a ball valve is a shut-off valve mechanism used for regulating the flow of a fluid inside a channel and it is characterized in that the regulating mechanism located in the inside is in the form a perforated ball. This closing body usually has two aligned holes such that the fluid can flow between both openings. The closing body is in turn enclosed in a surrounding frame to which both ends of the pipeline or pipe are connected.

The key is usually open by rotating said spherical closing body, operated by a key or handle, such that when the perforations of the closing body are aligned with the inlet and the outlet of the valve, the fluid flows through it, whereas by rotating the closing body a quarter turn, the openings are located perpendicular to the direction of the inlet and the outlet, such that passage of the fluid is blocked and the valve is closed.

Likewise, since it is a quarter-turn valve the position of the actuating key or handle is used for indicating the state of the valve (open or closed).

Among the main advantages of these valves, besides the fact that they are quarter-turn valves that can therefore be operated quickly, it must be pointed out that the perforated ball allows direct circulation in the open position with a considerably lower pressure loss than those of globe valves.

One of the possible drawbacks is that given that they can be closed quickly, a certain water hammer effect can occur causing the seat mechanisms of the closing body to suffer certain mechanical fatigue.

These valves can be two- or three-way valves by simply adding a third opening in the closing body and obviously adapting the shape of the surrounding frame to the third pipeline.

Such valves are widely used because they are, among other reasons, very easy to make. However, one of the weaknesses of a conventional ball valve structure, considering installations in which maintenance tasks are not usually carried out, is that the closing body is usually operated at a single point, where it is attached to the end of an operating key or handle, whereas at the diametrically opposing end, it is housed in a bearing formed in the surrounding frame or body of the valve.

This causes the force/stress, increased by the resistance of the elements that are usually gathered in the inner structures thereof as they are dragged by the fluid, particularly when said fluid is water, and experienced by the point attaching the key or handle and the closing body when closing and opening the valve to be high and it often ends up experiencing mechanical damage. Likewise, the force on the lever-shaped key or handle is also high so it is necessary to design these elements with high resistance, increasing the production cost and, despite all this, they often constitute the valve element that breaks or fails over time.

There are various key or handle designs for ball valves, among which the design of US design registration 412,966 of Newport News Shipbuilding and Drydock Company entitled "Valve Handle" dated December 4, 1998 or US design registration D459,444 of Shin Tai Spurt Water of the Garden Tools Co. Ltd entitled "Handle of a Ball Valve" dated May 3, 2001, can be mentioned by way of example.

Despite adopting different shapes for improving the mentioned fatigue problems, all the foregoing designs are devised for interacting at a single point on the spherical closing body and for transmitting rotational force to that point.

However, the present invention constitutes a structure that revolutionizes the shape of the closing body and of the key or handle, such that it interacts at two diametrically opposing points of the closing body, simultaneously transmitting rotational force to both points and reducing forces and mechanical stresses/strains both in the closing body and in the operating key or handle of the valve.

### Description

The present improved structure of a ball valve and the operating key thereof which is described below consists fundamentally of a surrounding frame of the valve that communicates the inlet and the outlet of a pipeline, through which a fluid circulates, which contains a preferably spherical or ball-type shape closing body provided with a pair of openings aligned with each other, that can rotate about itself, aligning respective openings with the inlet and outlet openings of the valve in the open position, or placing these perpendicular to the channel for the passage of fluid through the valve in the closed position. The mentioned spherical closing body consists of a preferably spherical body provided with two aligned openings, perpendicularly to which there are two rectangular seats where two shafts fit, said shafts transmitting the rotational forces of the closing body and running along the inside of two tubular projections transverse and perpendicular to the surrounding surface of the valve, the ends thereof where they are arranged integral with the key or handle element of the valve protruding outwardly. The spherical closing body therefore rotates due to the action of the two points attaching the closing body and the operating key or handle of the valve, the force being transmitted by respective shafts. The rotation of the spherical closing body is therefore transmitted by the mechanical rotational force of the key or handle through the two points attaching the closing body and the key or handle of the structure.

On the other hand, said shafts transmitting the rotational forces of the closing body and integral with the key or handle element of the valve are provided with pressure-tight joints for leak-tight attachment between the closing body and the surrounding frame or body of the valve.

Likewise, the outer surface of the mentioned tubular projecting bodies having, running along the inside thereof, the mentioned shafts through which movement is transmitted between the key and closing body, is provided with respective notches acting like a stop on the free ends of the key or handle given that these end up forming fingers that engage the preceding notches in the path of movement of the key. The movement of the key is therefore limited to a quarter turn, preventing it from being able to be forced, entailing a device with added protection which prolongs the service life of the key.

### Preferred Embodiment of the Invention

A detailed description of the improved structure of a ball valve and the operating key thereof, object of the present invention, will be provided below in reference to the attached drawings depicting, by way of non-limiting example, a preferred embodiment that is susceptible of all those variations that do not involve any fundamental change to the essential features of said improvements.

Said drawings illustrate:

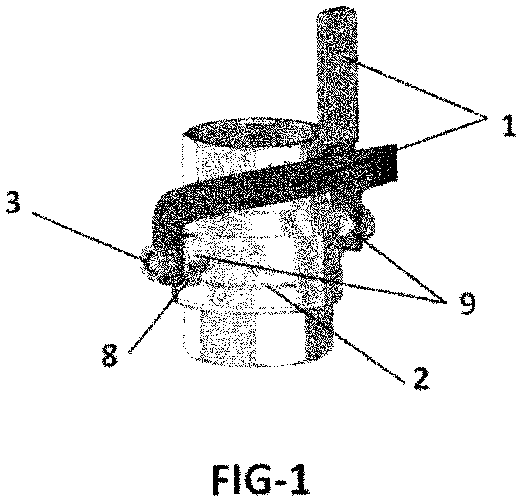

Figure 1 shows a perspective view of the improved structure of a ball valve and the operating key thereof with the key in the open position.

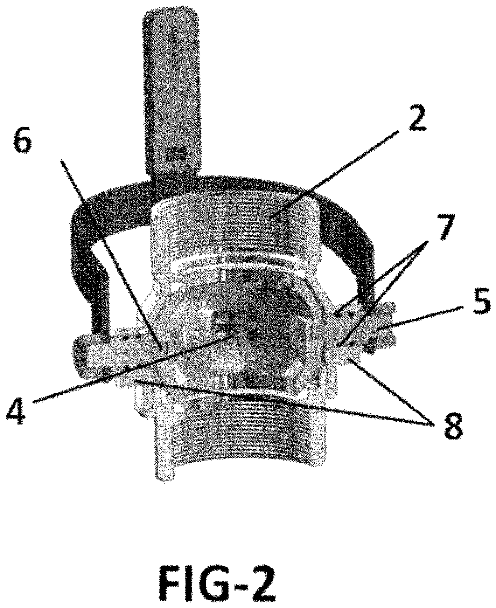

Figure 2 shows a perspective section view of the improved structure of a ball valve and the operating key thereof with the key in the open position.

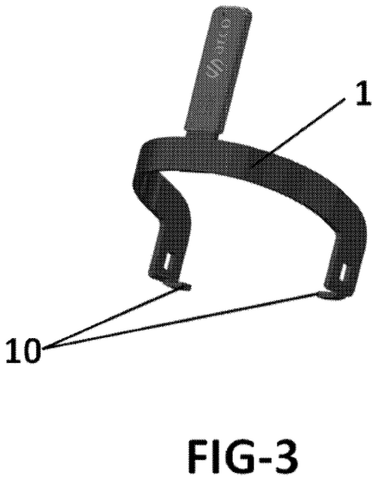

Figure 3 shows a perspective view of the key or handle of the improved structure of a ball valve and the operating key thereof.

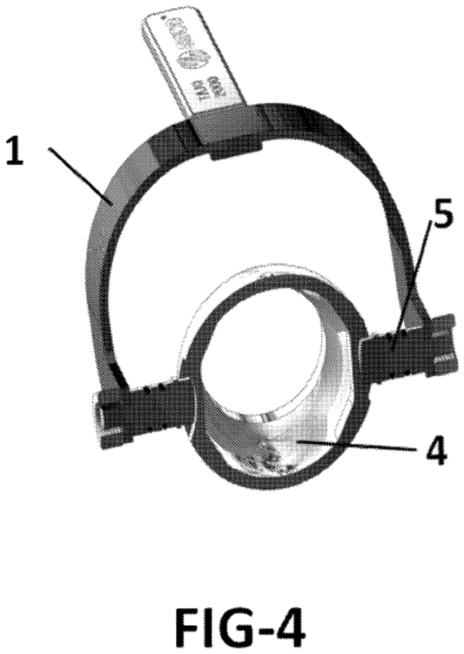

Figure 4 shows a perspective section view of the improved structure of a ball valve and the operating key thereof without the surrounding frame or body of the valve for illustrating the inner elements with the key in the closed position.

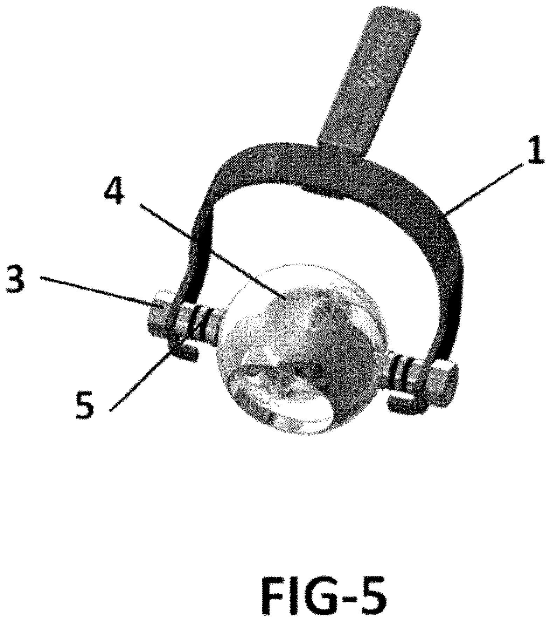

Figure 5 shows a perspective view of the improved structure of a ball valve and the operating key thereof without the surrounding frame or body of the valve for illustrating the inner elements with the key in the closed position.

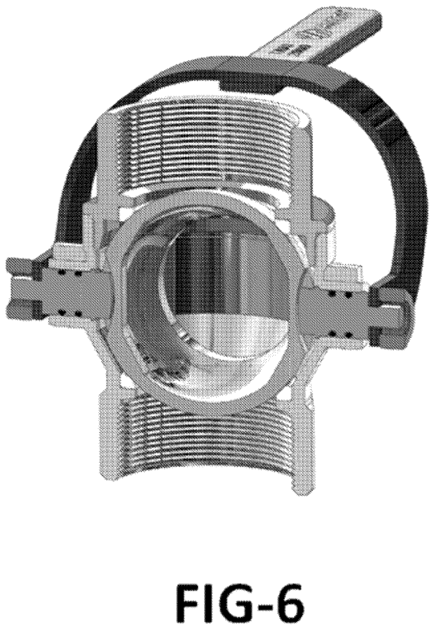

Figure 6 shows a perspective section view of the improved structure of a ball valve and the operating key thereof with the key in the closed position.

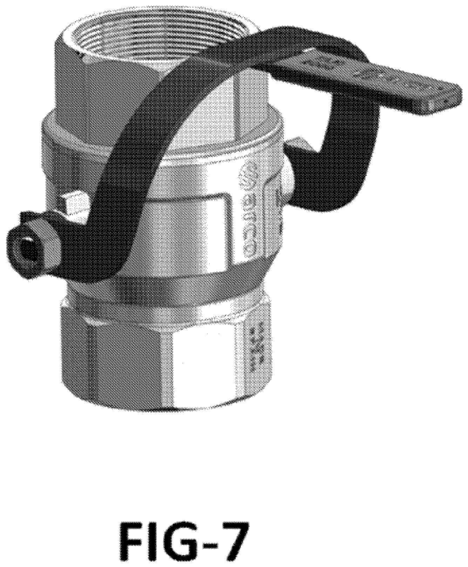

Figure 7 shows a perspective view of the improved structure of a ball valve and the operating key thereof with the key in the closed position.

According to the depicted example of implementation, the improved structure of a ball valve and the operating key thereof which is illustrated in this preferred embodiment consists fundamentally of a surrounding frame (2) of the valve that communicates the inlet and the outlet of a pipeline, through which a fluid circulates, which contains a spherical or ball-type shaped closing body (4) provided with a pair of openings aligned with each other, that can rotate about itself, aligning respective openings with the inlet and outlet openings of the valve in the open position, or placing these perpendicular to the channel for the passage of fluid through the valve in the closed position. The mentioned spherical closing body (4) consists of a body having said shape provided with two aligned openings, perpendicularly to which there are two rectangular seats (6) where two shafts (5) fit, said shafts transmitting the rotational forces of the closing body (4) and running along the inside of two tubular projections (9) transverse and perpendicular to the surrounding surface of the valve, the ends thereof where they are arranged integral with the key or handle element (1) of the valve protruding outwardly. The spherical closing body (4) therefore rotates due to the action of the two points (3) attaching the closing body (4) and the operating key or handle (1) of the valve, the force being transmitted by the respective shafts (5). The rotation of the spherical closing body (4) is therefore transmitted by the mechanical rotational force of the key or handle (1) through the two points (3) attaching the closing body (4) and the key or handle (1) of the structure.

On the other hand, said shafts (5) transmitting the rotational forces of the closing body (4) and integral with the key or handle element (1) of the valve, are provided with pressure-tight joints (7) for leak-tight attachment between the closing body and the surrounding frame or body (2) of the valve.

Likewise, the shape of the key or handle (1) of the valve is formed by a symmetrical surrounding structure having, protruding from the central part thereof, an actuating grip for manual operation the purpose of which consists of facilitating the operation of the valve and indicating the closed/open positions of the closing body.

On the other hand, the outer surface of the mentioned tubular projecting bodies (9) having, running along the inside thereof, the mentioned shafts (5) through which movement is transmitted between key (1) and closing body (4), is provided with respective notches (8) acting like a stop on the free ends of the key or handle (1) given that these end up forming fingers (10) which engage the preceding notches (8) in the path of movement of the key. In this manner and since the movement of the key (1) is limited to a quarter turn, the forces for operating on the notch and stop (8 and 10) are distributed in each of the tubular projecting bodies at 50% preventing the bodies from being able to be forced, entailing a device with added protection which prolongs the service life of the key.

Finally, the shape, materials and dimensions and generally all accessory and secondary elements may vary, provided that the essential features of the improvements that have been described are not changed or modified.

## Claims

1. Structure of a ball valve and an operating key (1) thereof, said valve consisting of a surrounding frame (2) of the valve that is adapted to communicate an inlet and an outlet of a pipeline, said valve including a closing body (4) rotatable between an open position and a closed position, said closing body (4) comprising a spherical body provided with two aligned openings, wherein perpendicularly to said aligned openings the closing body (4) further comprises two rectangular seats (6) in which two shafts (5) fit, each of said shafts (5) extending perpendicularly and transversely to a surrounding surface of the valve;
- wherein the ends of the shafts (5) protrude from tubular projections (9), such that the closing body (4) rotates due to the action of two points (3) attaching the closing body (4) and the operating key (1) of the valve, the force being transmitted by the respective shafts (5) whose ends are arranged integral with the operating key (1) of the valve;
- wherein the outer surface of the tubular projections (9), having running along the inside thereof the mentioned shafts (5) through which movement is transmitted between the operating key (1) and the closing body (4), is provided with respective notches (8) acting like a stop on free ends of the operating key (1), given that said free ends of the operating key (1) end up forming fingers (10) which engage the notches (8) in the path of movement of the operating key (1), such that the movement of the operating key (1) is limited, and the forces for operating on the notch (8) and finger (10) are distributed in each of the tubular projections (9) at 50% preventing the tubular projections (9) from being able to be forced;
wherein the shafts (5) comprise pressure-tight joints (7) for leak-tight attachment between the closing body (4) and the surrounding frame (2) of the valve;
**characterized in that:**
- the closing body (4) is rotatable in opposed directions;
- the movement of the operating key (1) is limited to a quarter turn.

2. Structure of a ball valve and the operating key (1) thereof according to claim 1, **characterized in that** the operating key (1) of the valve is formed by a symmetrical surrounding structure having, protruding from the central part thereof, an actuating grip for manual operation of the valve and for indicating the closed/open positions of the closing body (4).

## Patentansprüche

1. Aufbau aus einem Kugelventil und einem Betriebsschlüssel (1) für dieses, wobei das Ventil aus einem umgebenden Rahmen (2) des Ventils besteht, der daran angepasst ist, einen Einlass und einen Auslass einer Rohrleitung in Kommunikation zu bringen, wobei das Ventil einen schließenden Körper (4) aufweist, der zwischen einer offenen Position und einer geschlossenen Position drehbar ist, wobei der schließende Körper (4) einen Kugelkörper aufweist, der mit zwei ausgerichteten Öffnungen versehen ist, wobei senkrecht zu den ausgerichteten Öffnungen der schließende Körper (4) des weiteren zwei rechtwinklige Sitze (6) aufweist, in denen zwei Wellen (5) sitzen, wobei jede der Wellen (5) sich senkrecht und quer zu einer umgebenden Fläche des Ventils erstrecken;
wobei die Enden der Wellen (5) von rohrartigen Vorsprüngen (9) vorragen, so dass der schließende Körper (4) sich aufgrund der Wirkung von zwei Punkten (3) dreht, die den schließenden Körper (4) und den Betriebsschlüssel (1) des Ventils befestigen, wobei die Kraft durch die jeweiligen Wellen (5) übertragen wird, deren Enden einstückig mit dem Betriebsschlüssel (1) des Ventils angeordnet sind;
wobei die Außenfläche der rohrartigen Vorsprünge (9), die entlang ihrer Innenseite die erwähnten Wellen (5) laufen haben, durch die eine Bewegung zwischen dem Betriebsschlüssel (1) und dem schließenden Körper (4) übertragen wird, mit jeweiligen Einkerbungen (8) versehen ist, die wie ein Stopper an freien Enden des Betriebsschlüssels (1) wirken, unter der Voraussetzung, dass die freien Enden des Betriebsschlüssels (1) so enden, dass sie Finger (10) ausbilden, die mit den Einkerbungen (8) in dem Bewegungspfad des Betriebsschlüssels (1) so in Eingriff gelangen, dass die Bewegung des Betriebsschlüssels (1) begrenzt, und die Kräfte zum Betätigen an der Einkerbung (8) und dem Finger (10) in jedem der rohrartigen Vorsprünge (9) bei 50 % verteilt sind, wodurch verhindert ist, dass die rohrartigen Vorsprünge (9) gedrängt werden können;
wobei die Wellen (5) druckdichte Verbindungen (7) für eine leckagedichte Befestigung zwischen dem schließenden Körper (4) und dem umgebenden Rahmen (2) des Ventils aufweisen;
**dadurch gekennzeichnet, dass**
der schließende Körper (4) in entgegengesetzte Richtungen drehbar ist;
die Bewegung des Betriebsschlüssels (1) auf eine viertel Umdrehung begrenzt ist.

2. Aufbau aus einem Kugelventil und einem Betriebsschlüssel (1) für dieses gemäß Anspruch 1, **dadurch gekennzeichnet, dass** der Betriebsschlüssel (1) des Ventils durch einen symmetrischen umgebenden Aufbau ausgebildet ist, der vorragend von seinem mittleren Abschnitt einen Betätigungsgriff für ein manuelles Betätigen des Ventils und zum Anzeigen der geschlossenen/offenen Position des schließenden Körpers (4) hat.

## Revendications

1. Structure d'un clapet à bille et d'une clé d'actionnement (1) de celui-ci, ledit clapet étant constitué d'un cadre entourant (2) du clapet qui est adapté pour communiquer avec une entrée et une sortie d'une conduite, ledit clapet comprenant un corps obturateur (4) pouvant tourner entre une position ouverte et une position fermée, ledit corps obturateur (4) comprenant un corps sphérique pourvu de deux ouvertures alignées, dans laquelle, perpendiculairement auxdites ouvertures alignées, le corps obturateur (4) comprend en outre deux sièges rectangulaires (6) dans lesquels s'adaptent deux axes (5), chacun desdits axes (5) s'étendant perpendiculairement et transversalement à une surface environnante du clapet ;
- dans lequel les extrémités des axes (5) font saillie à partir de saillies tubulaires (9), de sorte que le corps obturateur (4) tourne sous l'action de deux points (3) fixant le corps obturateur (4) et la clé d'actionnement (1) du clapet, la force étant transmise par les axes respectifs (5) dont les extrémités sont agencées d'un seul tenant avec la clé d'actionnement (1) du clapet ;
- dans lequel la surface extérieure des saillies tubulaires (9), ayant s'étendant le long de l'intérieur de celles-ci les axes mentionnés (5) à travers lesquels un mouvement est transmis entre la clé d'actionnement (1) et le corps obturateur (4), est pourvue d'encoches respectives (8) agissant comme une butée sur les extrémités libres de la clé d'actionnement (1), étant donné que lesdites extrémités libres de la clé d'actionnement (1) finissent par former des doigts (10) qui viennent en prise avec les encoches (8) dans le trajet de déplacement de la clé d'actionnement (1), de sorte que le déplacement de la clé d'actionnement (1) est limité, et les forces pour actionner l'encoche (8) et le doigt (10) sont réparties dans chacune des saillies tubulaires (9) à 50 % en empêchant les saillies tubulaires (9) d'être forcées ;
- dans lequel les axes (5) comprennent des joints étanches à la pression (7) pour une fixation étanche aux fuites entre le corps obturateur (4) et le cadre entourant (2) du clapet ;
**caractérisée en ce que :**
- le corps obturateur (4) peut tourner dans des directions opposées ;
- le déplacement de la clé d'actionnement (1) est limité à un quart de tour.

2. Structure d'un clapet à bille et sa clé d'actionnement (1) selon la revendication 1, **caractérisée en ce que** la clé d'actionnement (1) du clapet est formée par une structure entourante symétrique ayant, faisant saillie à partir de sa partie centrale, une prise d'actionnement pour un actionnement manuel du clapet et pour indiquer les positions fermée/ouverte du corps obturateur (4).
